# EUROPEAN PATENT SPECIFICATION

(11) **EP 2 048 590 B1**
(45) Date of publication and mention of the grant of the patent: **01.10.2014**
(21) Application number: 07019748.8
(22) Date of filing: 09.10.2007
(51) Int. Cl.: G06Q 20/32, G06Q 20/34, G07F 7/10

(54) **Method for communication, communication device and secure processor**
Kommunikationsverfahren, Kommunikationsvorrichtung und sicherer Prozessor
Procédé de communication, dispositif de communication et processeur sécurisé

(43) Date of publication of application: 15.04.2009
(73) Proprietor: Vodafone Holding GmbH, 40213 Düsseldorf (DE)
(72) Inventor: Koraichi Najib, 6333 CT Schimmert (NL); Hoeksel Sebastiaan, 6229 VN Maastricht (NL); Montaner Javier, 50008 Zaragoza (ES)
(74) Representative: Jostarndt, Hans-Dieter

(56) References cited:
- US-A- 6 005 942
- US-A1- 2006 000 900
- ZHIQUN CHEN: "Java Card Technology for Smart Cards" 2000, ADDISON-WESLEY , US , XP002461877 * page 71 - page 83 *
- "Global Platform Card Specification 2.1.1"[Online] March 2003 (2003-03), page 133, XP002461876 Retrieved from the Internet: URL:www.globalplatform.org> [retrieved on 2007-12-11]
- RANKL , EFFING: "Handbuch der Chipkarten" 2002, HANSER VERLAG , MÜNCHEN , XP002461435 * page 295 - page 329 *

## Description

### Field of the invention

The invention relates to a method for communication between a secure processor and a terminal interface, whereby the terminal interface sends a request for a desired action with a programme module.

The invention furthermore relates to a mobile communication device and a secure processor.

### Background of the invention

It is known, to use smart cards as pocket-size cards with an embedded integrated secure element which can process information. Smart cards can receive input which is processed by integrated secured elements applications. A result of this process or information generated from the processing of the input is delivered as an output.

Users which want to use different functions have to use several single cards, e.g. a banking card, or an access card.

It is furthermore known to send information to the smart cards or to receive information from the smart cards by near field communication technology.

The near field communication (NFC) technology standardized in ISO 18092 and 21481, ECMA 340, 352 and 356, and ETSI TS 102 190 allows contactless communication between devices over a short distance of about 10 to 20 centimetres. Near field devices or cards use a radio module comprising a NFC (near field communication) controller with a microprocessor and memory and a magnetic loop antenna operating at a frequency of 13.56 MHz. Important applications for NFC are electronic payment and electronic ticketing. Here, a NFC capable device comprises a secure element that communicates with the NFC controller and that is used as an electronic wallet or for storing electronic tickets. Payment or validation of an electronic ticket is made by simply touching the NFC capable device to a NFC reader or by putting the device in sufficiently close distance to the NFC reader. The close proximity between the NFC capable device and the NFC reader is required here to avoid reading out the wrong person or device.

US 6 005 942 describes a system and a method for a multi-application smart card which allow for a post-issuance download of applications onto the smart card. The smart card comprises a card domain for managing aspects of the smart card. During a secure installation of an application, a security domain can provide services to the card domain to decrypt an application install fie and check the signature of an application file. A loaded application is also registered in the smart card and, thereafter, it is selectable for executing transactions.

The document Zhiqun Chen, "Java Card Technology for Smart Cards", Addison-Wesley, 2000 describes java card applets which can be installed on a java card and selected using a select method.

US 2006/0000900 A1 discloses a mobile device of a buyer that includes soft cards for conducting contactless financial transactions with a merchant system. The user of the device and the merchant set preferences for conducting the transactions, and a card application is selected in a negotiation process between the merchant system and the device of the buyer.

### Summary of the invention

It is an object of the present invention to create a method which allows an integration of several functions in a mobile communication device.

This object is achieved by a method according to claim 1, a communication device according to claim 8 and a secure processor according to claim 10. Embodiments of the method and the mobile communication device are subject of the dependant claims.

The invention includes a method for communication between a secure processor, e.g. a subscriber identity module with a terminal interface whereby the terminal interface sends a request for a desired interaction with a program module.

According to the invention the terminal interface or a digital processing unit connected to the terminal interface integrates a pattern into the request for the desired interaction. The pattern may include information about a class of interactions to which the desired interaction belongs.

Furthermore the secure processor contains at least two different program modules, and that the secure processor and/or a mobile communication device which is connected to the secure processor contains a selector, wherein the selector is capable of analysing the pattern.

The selector may determine the class of interactions, to which the request belongs.

The invention encompasses, that the selector makes a selection of a selectable program module, wherein the selection is influenced by the class of interactions to which the desired interaction belongs.

A preferred embodiment of the method, the secure processor and the mobile terminal is characterized in, that the selector determines, if more than one programme module is capable of performing the desired interaction.

Such a selection is e.g. advantageous, if the transmitted pattern contains an information, that an activation of a payment process is desired. This payment process can e.g. be carried out by different payment processes.

It is especially advantageous, that certain functionality is related to a respective programme module. In the case of a payment process this means, that one programme module allows a payment by a first credit card, another programme module allows a payment by another credit card, a further payment module allows a payment by debit card and that another programme enables direct transfer of money from a user account to another account or to a value transfer centre.

According to a preferred embodiment of the invention, in the case, that at least two programme modules are capable of performing the desired action, the selector checks, if information about preferences for the selection exists.

According to one embodiment of the invention, the information about preferences is included in the request for a desired action which is sent from the terminal interface.

According to another embodiment of the invention the information about preferences is included in the subscriber identity module.

It is of course possible, that information about the preferences is contained in more than one source of information. This includes, that information about preferences can be included as well in the request as in the subscriber identity module.

Especially in the case that no preferences are received from any of the sources of preferences (request or secure processor or mobile user equipment) or in the case that conflicting preferences exist, it is advantageous that a user interface is activated, wherein the user interface enables a selection of the programme module by a user of the mobile terminal (mobile terminal).

According to one embodiment of the method, the mobile communication device and the secure processor according to the invention, the selector analyses the pattern by analysing, how a bit stream is coded.

Many examples of coding are known by those skilled in the art, for example Manchester coding.

A further embodiment of the method, the communication device and the secure processor is characterized in, hat the request is handled according to the ISO 14443 Type A protocol.

According to one embodiment of the method, the mobile communication device and the secure processor according to the invention the request is handled according to the ISO 14443 Type B protocol.

According to one embodiment of the method, the mobile communication device and the secure processor according to the invention, a mobile communication device connectable to a secure processor (10) and a secure data domain, is characterized in,
- that the secure processor (10) contains at least two program modules which can be activated independently from each other,
- that the mobile communication device contains means for receiving a request which includes a pattern with information about a desired action,
- that the secure data domain (10) and/or the mobile communication device contains a selector (25, 26), wherein the selector (25, 26) is capable of analysing a pattern,
- that the selector (25, 26) is capable of determining a class of interactions to which the request belongs and
- that the selector (25, 26) is capable of making a selection of selectable program module, wherein the selection is influenced by the class of interactions to which the desired interaction belongs.

A further embodiment of the method, the communication device and the secure processor is characterized in, that the secure data domain is a subscriber identity module.

The invention includes different imported advantages.

One important advantage is a privacy protection. The invention enables different types of services which are normally associated to different cards and guarantees, that an operator of a terminal only gets information about the specific functionality which he needs to carry out a certain interaction.

An example of this is that a transport company only gets information, that a certain amount of a value is paid and no information about further payment opportunities or for card holder.

Similarly, a credit card company does not get any information about transport services or other services a holder of the mobile communication devices has used with other payment opportunities - for example an other credit card, a debit card or an electronic purse (ePurse).

In the case, that an ePurse is used, any information and any tracking of movements and activities such as purchases of goods from the card holder are protected from external access.

According to one embodiment of the method, the mobile communication device and the secure processor according to the invention, the secure processor is characterized in,
- that it contains at least two programme modules which can be activated independently from each other,
- that it contains means for receiving a request which includes a pattern,
- that the secure processor contains a selector (25) and/or is connectable to a selector (26), wherein at least one of the selectors (25, 26,) is capable of analyzing the pattern,
- that at least one of the selectors (25, 26) is capable of determining a class of interactions to which the request belongs,
- and that at least one of the selectors (25, 26) is capable of making a selection of a selectable programme module, wherein the selection is influenced by the class of interaction to which the desired interaction belongs.

Though the invention is not limited to near field communication, a near field communication (NFC) is an advantageous embodiment for carrying out the invention.

Contactless communication, or near field communication (NFC), allows for the exchange of data between a NFC enabled reader and a NFC enabled card when they are placed in close proximity of each other.

A computing device, such as a smart card, a SIM card, a mobile handset or a combination of those devices, can be equipped with NFC communication technologies. The computing device may also contain software that emulates the application level behaviour of one or more NFC cards. Multiple card applications may reside on one NFC card.

When such a computing device is placed in front of a NFC reader, it will respond to the reader as if it is one NFC card. The computing device may emulate multiple NFC cards.

There exist many different types of NFC readers (e.g. a specific RF protocol may be supported); and a given NFC reader can only handle a subset of the available NFC cards.

The challenge for the computing device is to present those NFC cards and applications that are supported / expected by the NFC reader. This problem is referred to as Application Selection.

Though the invention is especially advantageous for contactless communication, or near field communication (NFC) the exchange of data according to the invention can of course also be performed with contacts over greater distances - especially in the case, that suitable transmission lanes are established.

The unit, which exchanges information and requests for exchanging information, is according to the invention described as a terminal interface. The terminal interface is e.g. a reader, which can be integrated in various terminals.

It is especially useful, to integrate the reader in different user terminals, e.g. cash machine, ticket automates, terminal for handling parking tickets or access control systems.

However, for those skilled in the art, it is evident, that other types of readers can be used.

In some situations the information that is received from the reader is not enough to uniquely identify the card application that should be selected. In these situations it is proposed that a subset of card applications is activated prior to a transaction according to the invention (performing a selection process) in such a way that one card application can uniquely be identified during the transaction from the subset of activated applications.

The creation of the subset of card applications could be done through a user selection menu. Conflict detection is however needed to signal to the user whether the currently selected subset is valid (i.e. it shall be possible to uniquely select a card application at all times using the information from the NFC reader only).

The details of the conflict detection are provided in the NFC specifications.

The notion of activating a card application requires an extension to the lifecycle state diagram of a card application.

A card application is SELECTABLE & DEACTIVATED when it is not eligible for selection. Whereas a card application is SELECTABLE & ACTIVATED when it is eligible for selection by the NFC reader.

The selection of a card application that is in state SELECTABLE & ACTIVATED can be automated by applying pattern recognition on the initial information that is send from the NFC reader.

For this purpose every card application that is installed in the computing device has a pattern recognition parameter. The implementation details of the pattern recognition parameter are provided in the NFC specification document.

There may be many different types of application logic on the computing device that want to activate a card application. In order to guarantee that no inconsistencies arise it is proposed that state changes of card applications are handled centrally by one application; the central management application. The central management application implements the conflict detection logic described above.

In summary the following steps are advantageous:
- extension of state diagram with activated / deactivated states
- conflict detection to preselect / activate applications
- all state changes are managed through a central logic
- pattern recognition to automatically detect the card application that should be selected

According to a first aspect of the invention, the functions of multiple cards - especially are RFID cards - are integrated in a single secure element, the secure element is for example a secure data domain as for example a subscriber identity module card.

Other examples of secure data elements are: secure data domains as for example a secure memory card as it can for example be integrated into a mobile user equipment such as a mobile cellular phone, or a comparable device as a dictaphone.

According to one aspect of the invention the secure data domain is integrated into a secure processor, for example micro processor. The secure processor is for example integrated into the mobile user devices as for example a mobile phone, a mobile camera or a mobile dictaphone.

Functions of multiple cards (RFID) can be integrated in a single secure processor, for example a (SIM) card, consisting of secure elements, which are afterwards called Secure Data domains (SD).

The invention allows to integrate functions of various different single cards into one card, for example functionality as a banking card, as a transport card, as an access control card or as an event ticket card.

It is furthermore possible, to even install conflicting applications on the same secure data domain SD.

A preferred embodiment of the invention includes a method with the following steps:
1. Detection of a request
2. A Pattern of received signal is interpreted, if it belongs to one of plural patterns; this may already include a preference selection
3. Determination of a card type (type A, type B, ...) ISO 14443, implicit /explicit application selection, explicit application selection comprises SELECT command with specific Appl. ID
4. Check, if at least one card of the requested type; examination if more than one card belongs to the requested type:
   **Yes**: plural cards, no: select card, more than one active? Yes:
   programmable user interaction:
   predefined preference, a user or **3^{rd}** party
   **No**: end, user interaction

Preferred embodiments of the invention may include a user interface and/or a user setting menu.

In a preferred embodiment the user interface is activated, when a conflict between different requirements for activating more than one program module are detected.

However, it is also advantageous to include a user settings menu which allows an entering of preferences of a user - especially before performing the communication between the terminal interface and the secure data domain.

Preferred elements for including in an user settings menu are:
- list of available applications
- supports setting of preferences
- activation / deactivation of application
- opt. avoid two active one at same time of the same type

If different program modules are capable of carrying out interaction with the terminal interface, it is advantageous to include methods for a conflict management.

The conflict management can be handled in different ways, for example it is possible to check, if preferences already exists or can be determined.

In one embodiment of the invention, the selector contains a registry.

The registry is capable of performing several functions.

One of the functions which can be integrated in the registry is a conflict check between different applications.

For example the registry is capable of determining, if more than one program module is installed which is capable of performing one specific action.

An example of this is an existents of two different electronic purses.

In the case that two different purses or other functions related to one of the program modules could be activated, the registry could be used for finding out this coexistence and the possibility that a conflict could arise.

It is advantageous to inform a user of the mobile communication device via an electronic message about the potential conflict.

Solutions for solving the conflict - for example a definition of a priority of uses and blocking of other uses of similar applications which similar functionality can be blocked.

A selection for these options could be offered to the user of the communication device through a graphical user interface (GUI).

In this case the registry can have two functions: Support of determining if conflicts could arise and preventing conflicts by storing information about preferences for solving conflicts between applications with same or similar functionality.

For those skilled in the art, it is obvious that a combination of both functions is advantageous.

However those skills in the art could are aware that advantageous can be archived if at least one of these functions is used.

The invention includes different mobile communication devices which are capable of performing functions according to the invention.

According to one aspect of the invention a mobile communication device comprises a subscriber identity module (SIM) and NFC components for near field communication (NFC) including a radio module and a secure element for storing data used in near field communication services, the radio module communicating with the secure element. A control unit (selector) is connectable to the mobile communication device and to the subscriber identity module, the control unit and one processor of the mobile communication device and the subscriber identity module forming a unit of the mobile communication device including at least one NFC component.

According to a second aspect of the invention, a control unit is provided for use in a mobile communication device, which comprises a subscriber identity module. The control unit is connectable to the mobile device (mobile terminal) and to the subscriber identity module and in that the control unit is configured in such a way, that the control unit and one of the mobile communication device and the subscriber identity module form a unit including at least one NFC component, which is selected from the set of NFC components comprising a radio module for near field communication and a secure element for storing data used in near field communication services.

The invention involves the idea to provide an control unit, which can be connected to the mobile communication device and the SIM to enable NFC functionality for a mobile communication device that comprise a mobile communication device and/or a SIM, which are not NFC enabled. In particular, the control unit may be connected between the SIM and the mobile communication device, so that the SIM is connected to mobile communication device via the control unit.
The components for enabling the mobile communications device to be used in NFC include a radio module and a secure element connected to the radio module. The radio module may comprise an antenna and a controller connected to the antenna.

In combination with the mobile communication device or with the SIM, the control unit forms a subassembly of the mobile communication device, which comprises at least one NFC component. If a NFC component is not included in this subassembly, the control unit allows for connecting this NFC component to the NFC component included in the subassembly.

The invention makes it possible to use NFC services by means of a mobile communication device and/or a SIM, which are not NFC enabled. Thus, the invention avoids that a mobile user has to replace both of his mobile communication device and his SIM for using NFC services.

Within the scope of the invention, the term subscriber identity module refers to a smart card, which can be inserted into a mobile device, and which contains the identity of a subscriber to mobile communication services.

For example the subscriber identity module may be configured as a SIM card according to the GSM standard (GSM: Global System for Mobile Communications) or as an USIM card according to the UMTS standard (USIM: Universal Subscriber Identity Module; UMTS: Universal Mobile Telecommunications System). The mobile device (mobile terminal) may comprise a radio interface for accessing a mobile communication network and a user interface, such as, for example, a display unit and/or input unit, which can be operated by the mobile user.

In one embodiment of the mobile communication device and the control unit, at least one NFC component is included in the subscriber identity module.

This NFC component may be the secure element, which may be embedded as an application into the secure processor. Since the secure processor constitutes a secured chip, it already provides the necessary functionality for secure storage of sensitive date used in near field communication services such as, for example, electronic payment or electronic ticketing. However, also the radio module or part of the radio module, particularly the controller, may be included in the subscriber identity module.

In another embodiment of the mobile communication device and the control unit, at least one NFC component is included in mobile communication device.

This NFC component may be the radio module, particularly the antenna of the radio module, since the antenna can be arranged in the mobile communication device in such a way that radio reception is essentially not affected by interferences due to electric currents in the mobile communication device or shielding.

A further embodiment of the mobile communication device and the control unit provides that at least one NFC component is included in the control unit.

In this embodiment a NFC component, which is neither included in the existing mobile communication device of the mobile user nor in his existing secure processor can be provided by the control unit to enable NFC functionality of the mobiles user's mobile communication device.

In one embodiment of the mobile communication device and the control unit, the radio module and the secure element communicate using a first communication protocol.

The first communication protocol may be the Single Wire Protocol (SWP), which might become the standard for the data transfer between the secure element embedded in a secure processor and a mobile communication device including a radio module for near field communication. Within the scope of the first protocol, it may be provided that the radio module and the secure element communicate via a predetermined electric contact element of the subscriber identity module, which may be the contact element C6 that is unused in mobile telecommunication standards.

In one embodiment of the mobile communication device and the control unit, the secure element is included in the secure processor and the radio module is included in the control unit.

This embodiment has the advantage that a mobile user who disposes of a NFC enabled secure processor including the secure element is able to use his existing mobile communication device that does not include a radio module. The radio module is provided by the control unit, which, in particular, is less expansive for the mobile user than a new NFC enabled mobile communication device.

As explained before, a NFC enabled secure processor may comprise a predetermined electric contact element dedicated to the communication between the secure element embedded in the secure processor and the radio module.

Therefore, a related embodiment of the mobile communication device and the control unit provides that the secure processor comprises a first electric contact element for connecting the secure element to the radio module, the first electric contact element being contacted by an electric contact element of the control unit.

In this embodiment, the control unit comprises an electric contact connected to the first electric contact element of the secure processor provided for connecting the secure element embedded in the secure processor to the radio module included in the mobile communication device. As explained before, the first contact element of the secure processor may be the contact element.

In addition, the control unit may connect further electric contact element of the secure processor to the mobile communication device, thereby allowing a communication between the secure processor and the mobile communication device via the control unit.

In another embodiment of the mobile communication device and the control unit, the radio module is included in the mobile communication device and the secure element is included in the subscriber identity module, the secure processor being adapted to communicate with the mobile communication device using a second communication protocol, and the control unit is adapted to convert data messages transmitted from the radio module to the secure element from the first to the second protocol and to convert data messages transmitted from the secure element to the radio module element from the second to the first protocol.

This embodiment has the advantage that a NFC enabled mobile communication device including the radio device can be used together with a secure element embedded into a secure processor that is not NFC enabled, which means that the secure processor does not support communication according to the first communication protocol or via the first electric contact element. Rather, the secure processor does support communication according to a second communication protocol, which may be the communication protocol provided in a mobile communication standard for the communication between the mobile communication device and the subscriber identity module.

Therefore, in this embodiment data messages sent from the radio module to the secure element are transmitted via the control unit, which converts the data messages from the first to the second communication protocol. Likewise, data messages sent from the secure element to the radio are transmitted via the control unit, which converts those data messages from the second to the first communication protocol.

This may involve forwarding data messages received from the mobile communication device via an electric contact element dedicated to the communication between the radio module and the secure element to an electric contact element of the secure processor dedicated to the conventional, i.e. not NFC related, communication between the secure processor and the mobile communication device.

Therefore, in a related embodiment of the mobile communication device and the control unit, the mobile communication device comprises a second electric contact element for connecting the radio module to the secure element, the second electric contact element is contacted by an electric contact element of the control unit, and the mobile communication device comprises at least one third electric contact element connected to a further electric contact element of the control unit, the third electric contact element being provided for communication between the secure processor and the mobile communication device.

Here, the fourth electric contact element of the mobile communication device may be a contact element provided for the conventional communication between the mobile communication device and the SIM, which is not related to NFC services.

A further related embodiment of the mobile communication device and the control unit provides that the control unit is adapted to forward a data message received from the radio module via the second electric contact element to the secure element via the third electric contact element of the secure processor and that the control unit is adapted to forward a data message received from the secure element via the third contact element to the radio module via the second contact element.

Moreover, in one embodiment of the mobile communication device and the control unit, the radio module is included in the mobile communication device and the secure element is included in the control unit.

This embodiment also makes it possible to use a NFC enabled mobile communication device comprising the radio module in combination with a subscriber identity module, which is not NFC enabled. As an alternative to the embodiments described before, this embodiment provides the solution that the secure element is embedded in the control unit.

Here, an electric contact element of the control unit may contact the third electric contact element of the mobile communication device for connecting the radio module to the secure element, thereby allowing communication between the radio module and the secure element using the first protocol. Furthermore, the fourth electric contact element of the mobile communication device may be connected to the second electric contact element of the SIM via the control unit.

In one embodiment of the mobile communication device and the control unit, the radio module and the secure element are included in the control unit.

This embodiment has the advantage that all components necessary for near field communication are included in the control unit. Thus, for enabling NFC functionality for an existing mobile communication device, which is not NFC capable, the mobile user only needs to add the control unit, which performs NFC functionality autonomously, i.e. essentially independent from the mobile communication device and the subscriber identity module. Here, the mobile communication device is particularly used as power supply and as housing for the control unit.

The aforementioned and other aspects of the invention will also be apparent from and elucidated with reference to the embodiments of the invention described hereinafter making reference to the drawings.

### Brief description of the drawings

Reference will be made by way of example to the accompanying drawings in which
- Fig. 1: is a schematic block diagram of a secure data domain according to one embodiment of the invention,
- Fig. 2: is a schematic depiction of one embodiment of the invention,
- Fig. 3: is a schematic block diagram of preferred element which are capable of influencing a selector and
- Fig. 4: is a schematic block diagram of a mobile communication device according to the invention,

### Detailed description of embodiments of the invention

The Invention can be integrated into different communication and handling standards.

In order to facilitate an integration of the invention in current card systems respectively in Card systems planed for integrating further functions, it is especially useful to use the invention in environments according to the global platform standard. The global platform standard is a standard for smart card infrastructure.

Those skilled in the art understand that the descriptions according to the global platform standard can be transferred to other standards for smart card infrastructure.

According to the global platform standard the following definitions are used for explaining the afterwards described preferred embodiments of the invention:

### APDU (Application Protocol Data Units)

Standard communication messaging protocol between a card acceptance device and a smart card.

### API (Application Programming Interface)

A standardized set of methods for a programmer to take advantage of (i.e. interface with) the capabilities of the card or device. The API is essentially a set of tools or services commonly used by applications on a card or device.

### Application Provider

Entity that owns an application and is responsible for the application's behaviour.

### Business Logic

Business Logic Layer exercises the highest level of control over the operations of the terminal. The Business Logic Layer is principally responsible for selecting an appropriate application to activate, both in the card and in the terminal. The Business Logic Layer is also responsible for implementing local policies. Split tender purchases, for example, may be an accepted practice in some places, but not allowed in others.

### Card Manager

An on-card agent within the GlobalPlatform card which enables the Issuer to maintain and exercise control over the card. This agent controls which applications can be loaded onto the card after it has been issued.

### Chip Logic Component

The Chip Logic Component (CLC) Layer contains all the environment-independent code. The CLC Layer includes a module for each application the terminal supports. It is in the CLC Layer where the device component of each application resides.

### Common Criteria

A public shared security standard, on which card industry leaders are cooperating. This will be the standard to which most smart cards will be tested in the future.

### EEPROM (Electronically Erasable Programmable Read-Only Memory)

Memory that can be erased and reused, but does not require electrical power to maintain data. It is used primarily to store information that will change, such as transaction counters.

### EMV

Technical Specifications developed jointly by Europay, MasterCard International, and Visa to create standards and ensure global interoperability for use of Chip technology in the payment industry.

### Environment Services

These services provide a consistent interface to a set of resources commonly found on many chip-card terminals.

### ISO 7816

The ISO (International Standards Organization) standard which governs contact based integrated circuit cards.

### ITSEC

A regional security evaluation scheme. Based on assurance levels against private targets. Will be superseded by Common Criteria.

### Java Card®

The smart card runtime environment developed by Sun. Based on Java.

### GlobalPlatform

The industry standard for managing a smart card based single and multiple application program. Includes card specifications, device specifications, and systems specifications.

### GlobalPlatform API

Through the services contained in the GlobalPlatform API , all applications can be created and accessed in a uniform way.

### Post-Issuance Loading

The loading of applications to a card after the process of personalization and card issuance has taken place.

### Runtime Environment

The Runtime Environment consists of three basic components. These are the Card Operating System, the Virtual Machine and the Application Programming Interface (API)

### Security Domain

Security Domains can be established on the card to protect application providers or groups of applications. Security Domains enable the applications of various providers to share space on a card without compromising the security of any particular provider or application.

### Virtual Machine

A Virtual Machine acts as a translator, converting instructions of the application into unique commands understood by a specific type of card. A Virtual Machine enables application portability.

### Windows® for Smart Cards

The smart card runtime environment developed by Microsoft. Based on common WindowsNisual Basic tools and principles.

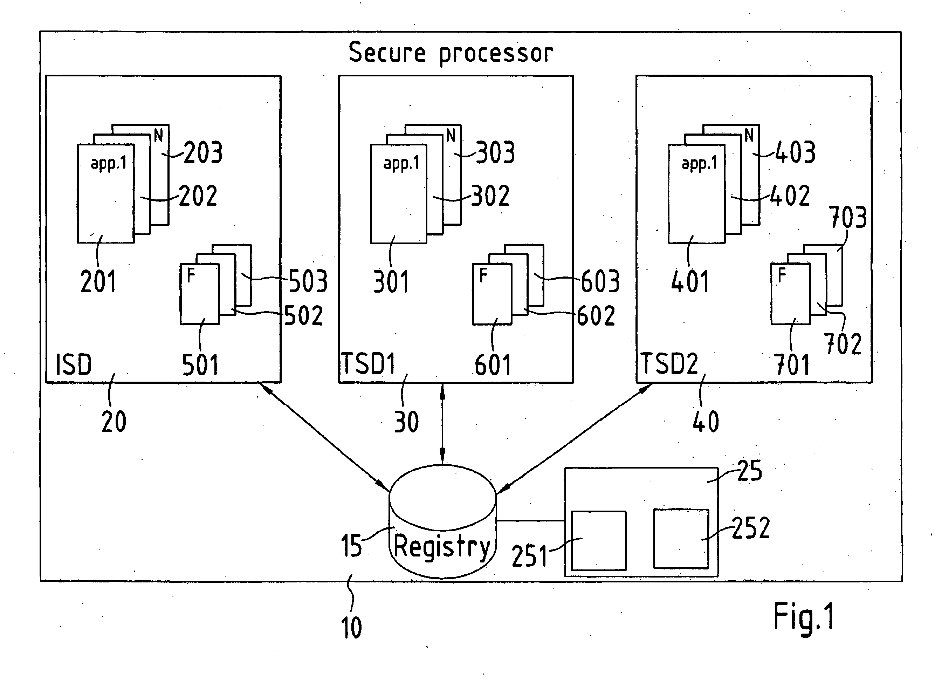

Fig. 1 shows a schematic depiction of a secure processor 10 according to the invention.

The secure processor contains a registry 20, which is connected to an issuer security domain ISD 20 and one or more third party security domains 30, 40.

The registry 20 contains information about resources and/or activation conditions for the domains 20, 30 and 40.

The registry 20 contains information about the security domains 20, 30 and 40 and the program modules 201, 202, 203, 301, 302, 303, 401, 402, 403 included in the security domains 20, 30 and 40.
With the describes secure processor it is possible to carry out methods for communication between the secure processor 10 and a terminal interface 5) whereby the terminal interface 5 sends a request for a desired interaction with a programme module 201, 202, 203, 301, 302, 303, 401, 402, 403.

The terminal interface 5 or a digital processing unit connected to the terminal interface 5 integrates a pattern into the request for the desired interaction, wherein the pattern includes information about a class of interactions to which the desired interaction belongs.

The secure processor 10 contains at least two different program modules, and that the secure processor 10 and/or a mobile communication device, which is connected to the secure processor 10 contains a selector 25, 26, wherein the selector 25, 26 is capable of analysing the pattern.

The selector 25, 26 determines the class of interactions, to which the request belongs.

Furthermore the selector 25, 26 makes a selection of a selectable program module, wherein the selection is influenced by the class of interactions to which the desired interaction belongs.

Preferably the registry contains some, most or even all of the following information:
- preferences of a user
- preferences of the installer of the terminal
- properties of program modules 201, 202, 203, 301, 302, 303, 401, 402, 403, 801, 802, 803 and 804
- storage capacity of data files 501, 502, 503, 601, 602, 603, 701, 702 and 703

It is possible, to carry out the invention with different type of secure processors. A preferred embodiment of such a secure processor is a subscriber identity module SIM or a processor of a smart card. These processors are modified according to the invention in order to achieve one or more of the advantages described in the current application text.

In one embodiment of the invention the secure processor is integrated in a contactless smart card, in which the chip communicates with the card reader through RFID induction technology (at data rates of 106 to 848 kbit/s). These cards require only close proximity to an antenna to complete transaction. They are often used when transactions must be processed quickly or hands-free, such as on mass transit systems, where smart cards can be used without even removing them from a wallet.

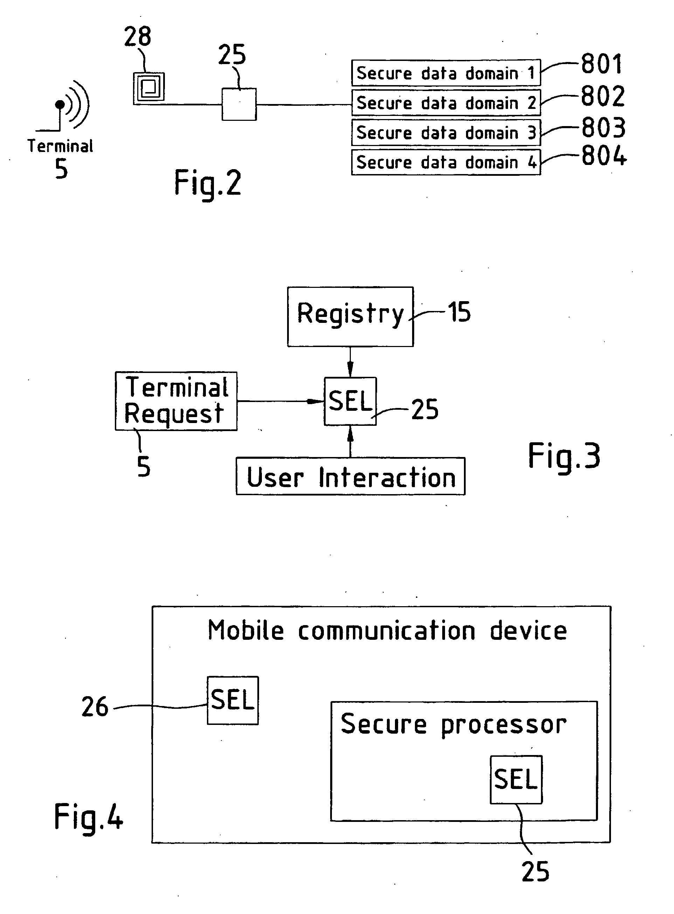

An example of contactless smart card communications is depicted in figure 2.

The embodiment according to figure 2 contains an antenna of a terminal interface 5.

The terminal interface 5 is capable of communicating with a further antenna 28 which is coupled to the selector 25.

One standard for contactless smart card communications is ISO/IEC 14443, dated 2001. It defines two types of contactless cards ("A" and "B"), allows for communications at distances up to 10 cm. There had been proposals for ISO 14443 types C, D, E and F that have been rejected by the International Organization for Standardization. An alternative standard for contactless smart cards is ISO 15693, which allows communications at distances up to 50 cm.

ISO 14443 defines a proximity card used for identification that usually uses the standard credit card form factor defined by ISO 7810 ID-1. Other form factors also are possible. The Radio Frequency Identification (RFID) reader uses an embedded microcontroller (including its own microprocessor and several types of memory) and a magnetic loop antenna that operates at 13.56 MHz (RFID frequency). More recent ICAO standards for machine-readable travel documents specify a cryptographically-signed file format and authentication protocol for storing biometric features (photos of the face, fingerprints, and/or iris).

ISO 14443 consists of four parts and describes two types of cards: type A and type B. The main differences between these types concern modulation methods, coding schemes (part 2) and protocol initialization procedures (part 3). Both type A and type B cards use the same high-level protocol (so called T=CL) described in part 4. The T=CL protocol specifies data block exchange and related mechanisms.

ISO 14443 uses following terms for components:
* PCD - proximity coupling device (or reader)
* PICC - proximity integrated circuit card

The Calypso (RFID) standard complies with ISO14443 part 1, 2, 3 and 4 type B. MIFARE cards comply with ISO14443 part 1, 2 and 3 type A.
E-passports comply with ISO 14443.
Some RFID credit cards use ISO 14443 type B

The current invention can be carried out independently from a certain standard. However to facilitate an integration of method and characteristics according to the invention, it is possible to use improvements of known standards as e.g.:
ISO 14443 Division:
ISO 14443-2 Physical Layer
ISO 14443-3 Initialization and Anti-collision
ISO 14443-4 Block Transmission Protocol
Contactless protocol standards

### Common Behaviour

Contactless Reader/validator

When switched-on, the contactless reader - terminal 5 - generates a Radio Frequency (RF) field.

The terminal 5 starts polling for a contactless device by sending requests (REQA, REQB,..) periodically.

If a correct answer is received, it executes an anti-collision loop in order to detect all devices in the field. Then it selects one of them and starts data communication.

### Contacless cards

The power is provided by the RF field

An RF antenna is connected to the card to retrieve this power.

### Contactless mobile phones

Specifications O the NFC Forum to address use cases related to a contactless mobile phone environment

Antenna in on the mobile connected to a NFC chip, this NFC chip forwards contactless data to the SIM card.

ISO 1443 Type A/B protocol description

### Contacless Data Communication

Once the initialization and anti-collision phases are over, the data communication begins.

RF Reader sends the first command (generally an APDU)
The APDU protocol is similar to the one of T=1 protocol
- Data is always included in response
- No GetResponse

The protocol is Half Duplex, the RF does not reader send the next APDU before the card answers the previous one.

When the transaction is over, the RF reader sends a Halt or Deselect Command.

All communication stops
The card then waits for a Wake-Up signal or a field exit.

ISO 15693 is an ISO standard for "Vicinity Cards", i.e. cards which can be read from a greater distance as compared to Proximity cards.
ISO 15693 systems operate at the 13.56 MHz frequency, and offer maximum read distance of 1-1.5 metres.
As the vicinity cards have to operate at a greater distance, the necessary magnetic field is less (0.15 to 5 A/m) than that for a proximity card (1.5 to 7.5 A/m).

The selector 25 is capable of activating and/or deactivating secure data domains 801, 802, 803 and 804 independently from each other.

The representation of secure data domains in Fig. 1 and Fig. 2 is of course only schematic. According to a preferred embodiment of the invention the selector 25 is capable of reserving resources for secure data domains. Therefore the selector 25 is capable of determining a number of secure data domains which exists or could exist within a processor environment.
In the case, that at least two programme modules are capable of performing the desired action, the selector 25 checks, if information about preferences for the selection exists.

Sources for information about preferences for the selection are depicted in Fig. 3.

The information about preferences is for example included in the request for a desired action which is sent from the terminal interface.

According to another embodiment of the invention the information about preferences is included in the subscriber identity module.

It is of course possible, that information about the preferences is contained in more than one source of information. This includes, that information about preferences can be included as well in the request as in the subscriber identity module.

Especially in the case that no preferences are received from any of the sources of preferences (request or secure processor or mobile user equipment) or in the case that conflicting preferences exist, it is advantageous that a user interface is activated, wherein the user interface enables a selection of the programme module by a user of the mobile terminal (mobile terminal). This allows an interaction by a user.

Fig. 4 is a schematic block diagram of a mobile communication device according to the invention.

This mobile communication device could contain one selector 25 and an additional selector 26.

It is possible to split selector functions between the first selector 25 and the second selector 26.

This separation of selector functionality allows the different selectors (control units) to makes use of each others properties. For example a UICC - Universal Integrated Circuit Card, especially according to ETSI SCP standards - is a secure processor, provisioned in a secure production facility. This secure processor can be produced as a removable device.

The other control unit is a fixed device, especially not yet provisioned with a key for cryptographic functions as authentication/encryption/decryption.

The UICC could provision a communication device with some delegated keys to allow the communication device to perform such operations as a SIM does. For example the communication device can be paired with a SIM and even if the SIM is not present in the communication device some functionality may still be available to a user of the communication device.

For example a payment and/or provisioning of tickets is empowered by the UICC.

Figure 4 shows a block diagram of a mobile communication device according to the invention, such as, for example, a cellular phones or a personal data assistant (PDA). The mobile communication device comprises a main processor for controlling the operation of the mobile communication device.

A memory unit is coupled to a main processor for storing data and applications that can be run on the processor. Furthermore, a radio antenna is provided in the mobile communication device for connecting the mobile communication device to a communication network, such as, for example Bluetooth, near field communication (NFC), a GSM network or an UMTS network.

Moreover, the mobile communication device comprises a display unit and an input unit, which can be operated by the user of the mobile communication device. The input unit for user interaction may be configured as a keypad.

Through a card reader unit, the mobile communication device can be connected to a secure processor, for example a subscriber identity module (SIM) 10 to form a mobile communication device. The secure processor 10 may be configured as a SIM according to the GSM standard or a USIM according to the UMTS standard. The SIM 10 is a smart card comprising a microprocessor and one or more memory units. It stores preconfigured user-related and network-related data, particularly data identifying the mobile user and data for authenticating the user or his mobile communication device to a mobile communication network. Furthermore, the SIM 10 may be able to store data of the user during operation, such as for example, a phone book or messages received or sent with the mobile communication device. For securely storing the data, the SIM 10 contains one or more applications for storing the data using cryptographic algorithms. Further applications such as, for example, the SIM 10 application Toolkit (STK), enable the SIM 10 to access functions of the mobile communication device.

For the communication between a radio module in the mobile communication device, a dedicated communication mechanism may be provided. One solution is the Single Wire Protocol (SWP), which is being standardized by the European Telecommunications Standards Institute (ETSI).

The SWP allows a bidirectional communication using a single terminal. This terminal may be a contact element C6, which is unused within the scope of the ISO protocols and the mobile communication standards. Therefore, in order to enable NFC functionality in a mobile communication device, a SIM 10, which is used in connection with a mobile terminal comprising a radio module, must particularly support communication with the mobile communication device according to the SWP using the contact element C6.

A SIM 10, which does support such a communication is referred to a as NFC enabled SIM 10 hereinafter, while a mobile terminal 100 comprising a radio module for near field communication is referred to as NFC enabled mobile communication device 50 hereinafter.

### List of references

- 5.: Terminal interface
- 10.: Secure processor
- 15.: Registry
- 20.: Issuer security domain
- 25.: Control unit
- 26.: Control unit
- 28.: Antenna
- 30.: TSD - TSM Security Domain
- 40.: TSD - TSM Security Domain
- 50.: Mobile communication device
- 201.: Programme module (secure data domain)
- 202.: Programme module (secure data domain
- 203.: Secure data domain
- 251.: RFM Remote file manager
- 252.: Remote application manager
- 301.: Programme module (secure data domain)
- 302.: Programme module (secure data domain)
- 303.: Programme module (secure data domain)
- 401.: Programme module (secure data domain)
- 402.: Programme module (secure data domain)
- 403.: Programme module (secure data domain)
- 501.: Data file
- 502.: Data file
- 503.: Data file
- 601.: Data file
- 602.: Data file
- 603.: Data file
- 701.: Data file
- 702.: Data file
- 703.: Data file
- 801.: Programme module (secure data domain)
- 802.: Programme module (secure data domain)
- 803.: Programme module (secure data domain)
- 804.: Programme module (secure data domain)

## Claims

1. Method for communication between a secure processor (10) and a terminal interface (5), wherein
- the terminal interface (5) sends a request for a desired interaction with a programme module (201, 202, 203, 301, 302, 303, 401, 402, 403),
- the terminal interface (5) or a digital processing unit connected to the terminal interface (5) integrates a pattern into the request for the desired interaction,
- the secure processor (10) contains at least two different program modules, the program modules having a pattern recognition parameter for automatically selecting the program module by applying pattern recognition,
- the secure processor (10) and/or a mobile communication device which is connected to the secure processor (10) contains a selector (25, 26), and
- the selector (25, 26) is capable of analysing the pattern and making a selection of a selectable program module by applying a pattern recognition to automatically detect the program module that is selected
**characterized in that** a subset of program modules is activated prior to the selection process in such a way that one program module can uniquely be identified during the selection from the subset of activated program modules.

2. The method according to claim 1, **characterized in that** in the case that at least two programme modules (201, 202, 203, 301, 302, 303, 401, 402, 403) are capable of performing the desired action, the selector checks, if information about preferences for the selection exists.

3. The method according to claim 2, **characterized in that** information about preferences is included in the request.

4. The method according to claim 2 or 3, **characterized in that** a user interface is activated, wherein the user interface enables a selection of the programme module (201, 202, 203, 301, 302, 303, 401, 402, 403) by a user of the mobile terminal (100).

5. The method according to any of the preceding claims, **characterized in that** the selector (25, 26) analyses the pattern by analysing, how a bit stream is coded.

6. The method according to claim 5, **characterized in that** the request is handled according to the ISO 14443 Type A protocol.

7. The method according to claim 5, **characterized in that** the request is handled according to the ISO 14443 Type B protocol.

8. A mobile communication device connectable to a secure processor (10) and a secure data domain, wherein
- the secure processor (10) contains at least two program modules which can be activated independently from each other, the program modules having a pattern recognition parameter for automatically selecting the program module by applying pattern recognition,
- the mobile communication device contains means for receiving a request which includes a pattern with information about a desired action,
- the secure data domain (10) and/or the mobile communication device contains a selector (25, 26), wherein the selector (25, 26) is capable of analysing the pattern and of making a selection of selectable program module by applying a pattern recognition to automatically detect the program module that is selected,
**characterized in that** a subset of program modules is activated prior to the selection process in such a way that one program module can uniquely be identified during the selection from the subset of activated program modules.

9. The mobile communication device according to claim 8, **characterized in that** the secure data domain (10) is a subscriber identity module.

10. Secure processor, containing at least two programme modules which can be activated independently from each other, the program modules having a pattern recognition parameter for automatically selecting the program module by applying pattern recognition, and containing means for receiving a request which includes a pattern, wherein
- the secure processor contains a selector (25) and/or is connectable to a selector (26), and
- at least one of the selectors (25, 26) is capable of analyzing the pattern and of making a selection of a selectable programme module by applying a pattern recognition to automatically detect the program module that is selected,
**characterized in that** a subset of program modules is activated prior to the selection process in such a way that one program module can uniquely be identified during the selection from the subset of activated program modules..

## Patentansprüche

1. Verfahren zur Kommunikation zwischen einem sicheren Prozessor (10) und einer Endgerätschnittstelle (5), wobei
- die Endgerätschnittstelle (5) eine Anforderung für eine gewünschte Interaktion mit einem Programmmodul (201, 202, 203,301,302,303,401,402,403)sendet,
- die Endgerätschnittstelle (5) oder eine mit der Endgerätschnittstelle (5) verbundene digitale Verarbeitungseinheit ein Muster in die Anforderung für die gewünschte Interaktion integriert,
- der sichere Prozessor (10) wenigstens zwei verschiedene Programmmodule enthält, wobei die Programmmodule einen Mustererkennungsparameter zum automatischen Auswählen des Programmmoduls durch Anwendung einer Mustererkennung aufweisen,
- der sichere Prozessor (10) und/oder eine Mobilkommunikationsvorrichtung, die mit dem sicheren Prozessor (10) verbunden ist, eine Auswahleinrichtung (25, 26) enthält, und
- die Auswahleinrichtung (25, 26) das Muster analysieren kann und durch Anwenden einer Mustererkennung eine Auswahl eines auswählbaren Programmmoduls treffen kann, um das Programmmodul, das ausgewählt ist, automatisch zu detektieren,
- **dadurch gekennzeichnet, dass** eine Teilmenge von Programmmodulen vor dem Auswahlprozess in der Weise aktiviert werden, dass ein Programmmodul während der Auswahl aus der Teilmenge aktivierter Programmmodule eindeutig identifiziert werden kann.

2. Verfahren nach Anspruch 1, **dadurch gekennzeichnet, dass** die Auswahleinrichtung prüft, ob es Informationen über Präferenzen für die Auswahl gibt, falls wenigstens zwei Programmmodule (201, 202, 203, 301, 302, 303, 401, 402, 403) die gewünschte Aktion ausführen können.

3. Verfahren nach Anspruch 2, **dadurch gekennzeichnet, dass** in der Anforderung Informationen über Präferenzen enthalten sind.

4. Verfahren nach Anspruch 2 oder 3, **dadurch gekennzeichnet, dass** eine Nutzerschnittstelle aktiviert wird, wobei die Nutzerschnittstelle eine Auswahl des Programmmoduls (201, 202, 203, 301, 302, 303, 401, 402, 403) durch einen Nutzer des mobilen Endgeräts (100) ermöglicht.

5. Verfahren nach einem der vorhergehenden Ansprüche, **dadurch gekennzeichnet, dass** die Auswahleinrichtung (25, 26) das Muster dadurch analysiert, dass sie analysiert, wie ein Bitstrom codiert ist.

6. Verfahren nach Anspruch 5, **dadurch gekennzeichnet, dass** die Anforderung in Übereinstimmung mit dem Protokoll ISO 14443, Typ A, behandelt wird.

7. Verfahren nach Anspruch 5, **dadurch gekennzeichnet, dass** die Anforderung in Übereinstimmung mit dem Protokoll ISO 14443, Typ B, behandelt wird.

8. Mobilkommunikationsvorrichtung, die mit einem sicheren Prozessor (10) und mit einer sicheren Datendomäne verbunden werden kann, wobei
- der sichere Prozessor (10) wenigstens zwei Programmmodule enthält, die unabhängig voneinander aktiviert werden können, wobei die Programmmodule einen Mustererkennungsparameter zum automatischen Auswählen des Programmmoduls durch Anwenden einer Mustererkennung aufweisen,
- die Mobilkommunikationsvorrichtung Mittel zum Empfangen einer Anforderung enthält, die ein Muster mit Informationen über eine gewünschte Aktion enthält,
- die sichere Datendomäne (10) und/oder die Mobilkommunikationsvorrichtung eine Auswahleinrichtung (25, 26) enthält, wobei die Auswahleinrichtung (25, 26) das Muster analysieren kann und durch Anwenden einer Mustererkennung eine Auswahl des auswählbaren Programmmoduls treffen kann, um das Programmmodul, das ausgewählt ist, automatisch zu detektieren
**dadurch gekennzeichnet, dass** eine Teilmenge von Programmmodulen vor dem Auswahlprozess in der Weise aktiviert werden, dass ein Programmmodul während der Auswahl aus der Teilmenge aktivierter Programmmodule eindeutig identifiziert werden kann.

9. Mobilkommunikationsvorrichtung nach Anspruch 8, **dadurch gekennzeichnet, dass** die sichere Datendomäne (10) ein Teilnehmerkennungsmodul ist.

10. Sicherer Prozessor, der wenigstens zwei Programmmodule enthält, die unabhängig voneinander aktiviert werden können, wobei die Programmmodule einen Mustererkennungsparameter zum automatischen Auswählen des Programmmoduls durch Anwenden einer Mustererkennung aufweisen und Mittel zum Empfangen einer Anforderung, die ein Muster enthält, enthalten, wobei
- der sichere Prozessor eine Auswahleinrichtung (25) enthält und/oder mit einer Auswahleinrichtung (26) verbunden werden kann, und
- wenigstens eine der Auswahleinrichtungen (25, 26) das Muster analysieren kann und durch Anwenden einer Mustererkennung eine Auswahl eines auswählbaren Programmmoduls treffen kann, um das Programmmodul, das ausgewählt ist, automatisch zu detektieren
**dadurch gekennzeichnet, dass** eine Teilmenge von Programmmodulen vor dem Auswahlprozess in der Weise aktiviert werden, dass ein Programmmodul während der Auswahl aus der Teilmenge aktivierter Programmmodule eindeutig identifiziert werden kann.

## Revendications

1. Procédé de communication entre un processeur sécurisé (10) et une interface de terminal (5), dans lequel
- l'interface de terminal (5) envoie une requête pour une interaction souhaitée avec un module de programme (201, 202, 203, 301, 302, 303, 401, 402, 403),
- l'interface de terminal (5) ou une unité de traitement numérique connectée à l'interface de terminal (5) intègre un modèle dans la requête pour l'interaction souhaitée,
- le processeur sécurisé (10) contient au moins deux modules de programme différents, les modules de programme présentant un paramètre de reconnaissance de modèle pour sélectionner automatiquement le module de programme en appliquant la reconnaissance de modèle,
- le processeur sécurisé (10) et/ou un dispositif de communication mobile qui est connecté au processeur sécurisé (10) contient un sélecteur (25, 26), et
- le sélecteur (25, 26) est capable d'analyser le modèle et de faire une sélection d'un module de programme pouvant être sélectionné en appliquant une reconnaissance de modèle pour détecter automatiquement le module de programme qui est sélectionné,
**caractérisé en ce qu'**un sous-ensemble de modules de programme est activé avant le processus de sélection de telle façon qu'un module de programme peut être identifié de façon unique pendant la sélection parmi le sous-ensemble de modules de programme activés.

2. Procédé selon la revendication 1, **caractérisé en ce qu'**au cas où au moins deux modules de programme (201, 202, 203, 301, 302, 303, 401, 402, 403) sont capables d'effectuer l'action souhaitée, le sélecteur vérifie si les informations sur les préférences de sélection existent.

3. Procédé selon la revendication 2, **caractérisé en ce que** les informations sur les préférences sont incluses dans la requête.

4. Procédé selon la revendication 2 ou 3, **caractérisé en ce qu'**une interface utilisateur est activée, sachant que l'interface utilisateur permet à un utilisateur du terminal mobile (100) de sélectionner le module de programme (201, 202, 203,301,302,303,401,402,403).

5. Procédé selon l'une quelconque des revendications précédentes, **caractérisé en ce que** le sélecteur (25, 26) analyse le modèle en analysant comment un flux binaire est codé.

6. Procédé selon la revendication 5, **caractérisé en ce que** la requête est gérée selon le protocole de type A de l'ISO 14443.

7. Procédé selon la revendication 5, **caractérisé en ce que** la requête est gérée selon le protocole de type B de l'ISO 14443.

8. Dispositif de communication mobile pouvant être connecté à un processeur sécurisé (10) et à un domaine de données sécurisé, dans lequel
- le processeur sécurisé (10) contient au moins deux modules de programme qui peuvent être activés indépendamment l'un de l'autre, les modules de programme présentant un paramètre de reconnaissance de modèle pour sélectionner automatiquement le module de programme en appliquant la reconnaissance de modèle,
- le dispositif de communication mobile contient un moyen pour recevoir une requête qui comprend un modèle avec des informations sur une action souhaitée,
- le domaine de données sécurisé (10) et/ou le dispositif de communication mobile contient un sélecteur (25, 26), sachant que le sélecteur (25, 26) est capable d'analyser le modèle et de faire une sélection d'un module de programme pouvant être sélectionné en appliquant une reconnaissance de modèle pour détecter automatiquement le module de programme qui est sélectionné,
**caractérisé en ce qu'**un sous-ensemble de modules de programme est activé avant le processus de sélection de telle façon qu'un module de programme peut être identifié de façon unique pendant la sélection parmi le sous-ensemble de modules de programme activés.

9. Dispositif de communication mobile selon la revendication 8, **caractérisé en ce que** le domaine de données sécurisé (10) est un module d'identité d'abonné.

10. Processeur sécurisé, contenant au moins deux modules de programme qui peuvent être activés indépendamment l'un de l'autre, les modules de programme présentant un paramètre de reconnaissance de modèle pour sélectionner automatiquement le module de programme en appliquant la reconnaissance de modèle, et contenant un moyen pour recevoir une requête qui comprend un modèle, dans lequel
- le processeur sécurisé contient un sélecteur (25) et/ou peut être connecté à un sélecteur (26), et
- au moins un des sélecteurs (25, 26) est capable d'analyser le modèle et de faire une sélection d'un module de programme pouvant être sélectionné en appliquant une reconnaissance de modèle pour détecter automatiquement le module de programme qui est sélectionné,
**caractérisé en ce qu'**un sous-ensemble de modules de programme est activé avant le processus de sélection de telle façon qu'un module de programme peut être identifié de façon unique pendant la sélection parmi le sous-ensemble de modules de programme activés.
